# EUROPÄISCHE PATENTSCHRIFT

(11) **EP 0 372 292 B1**
(45) Veröffentlichungstag und Bekanntmachung des Hinweises auf die Patenterteilung: **08.09.1993**
(21) Anmeldenummer: 89121501.4
(22) Anmeldetag: 21.11.1989
(51) Int. Cl.: C08G 18/34, C08J 9/08

(54) **Verfahren zur Herstellung von Formkörpern aus Polyurethanschaumstoffen**
Process for the production of moulded parts from polyurethane foams.
Procédé pour la préparation de pièces moulées de mousses de polyuréthane.

(30) Priorität: 03.12.1988 DE 3840817
(43) Veröffentlichungstag der Anmeldung: 13.06.1990
(73) Patentinhaber: BAYER AG, 51368 Leverkusen (DE)
(72) Erfinder: Neuhaus, Alfred, D-5090 Leverkusen (DE); Ganster, Otto, Dr., D-5068 Odenthal (DE); Kopp, Richard, Dr., D-5000 Köln 80 (DE)

(56) Entgegenhaltungen:
- EP-A- 0 051 211
- EP-A- 0 074 064
- EP-A- 0 154 669
- EP-A- 0 240 715
- FR-A- 2 509 317

## Beschreibung

Die Erfindung betrifft ein neus Verfahren zur Herstellung von Formköpern aus Polyurethanschaumstoffen mit kompakter Oberfläche, bei welchem als Treibmittel organische Carbonsauren eingesetzt werden, und die so erhaltenen Formkörper.

Die Herstellung von Formkörpern aus Polyurethanschaumstoffen mit kompakter Oberfläche durch Formverschäumung ist grundsätzlich bekannt (z.B. DE-AS 1 196 864). Sie erfolgt durch Formverschäumung eines reaktions- und schaumfähigen Gemischs aus organischen Polyisocyanaten, Verbindungen mit gegenüber Isocyanatgruppen reaktionsfähigen Gruppen und den üblichen Hilfs- und Zusatzmitteln, wobei man in die Form eine größere Menge an reaktionsfähigem Gemisch einträgt, als zum Ausfüllen des Formvolumens durch freie Verschäumungen erforderlich wäre. Durch geeignete Wahl der Ausgangskomponenten, insbesondere durch geeignete Wahl ihres Molekulargewichts und ihrer Funktionalität ist es dabei möglich, sowohl weiche als auch halbharte als auch harte Formkörper herzustellen. Die dichte Außenhaut wird hierbei dadurch erreicht, daß man einerseits in die Form eine größere Menge an schaumfähigem Gemisch einträgt, als zum Ausfüllen des Formvolumens durch freie Verschäumung erforderlich wäre und andererseits als Treibmittel Fluorchlorkohlenwasserstoffe verwendet, die an der Forminnenwand unter den vorherrschenden Temperatur- und Druckbedingungen kondensieren, so daß die Treibreaktion an der Forminnenwand zum Stillstand kommt und eine kompakte Außenhaut entsteht.

Neben den genannten physikalischen Treibmitteln wird in der technischen Polyurethanchemie auch Wasser als chemisches Treibmittel in Form des durch Reaktion zwischen Wasser und Isocyanaten entstehenden Kohlendioxids verwendet. Mit diesem chemischen Treibmittel lassen sich zwar freigeschäumte Polyurethanschaumstoffe von ausgezeichneter Qualität herstellen, nicht jedoch qualitativ hochwertige Schaumstoff-Formkörper mit kompakter Oberfläche (Integralschaumstoffe). Dies liegt daran, daß das Kohlendioxid unter den üblichen Bedingungen an der Forminnenwand nicht kondensiert und somit die Treibwirkung in der Randzone nicht gebremst wird.

Grundsätzlich mit dem gleichen Problem behaftet und daher zur Herstellung von hochwertigen Integralschaumstoffen ungeeignet sind andere chemische oder physikalische Treibmittel, wie beispielsweise stickstoffabspaltende Treibmittel wie Azo-dicarbonamid, Azo-bis-isobutyronitril, kohlendioxidabspaltende Treibmittel wie Pyrokohlensäureester und -anhydride (US-PS 4 070 310) oder in den Reaktionskomponenten, insbesondere der Komponente mit gegenüber Isocyanatgruppen reaktionsfähigen Gruppen gelöste Treibmittel wie beispielsweise Luft.

Wie jetzt überraschend gefunden wurde, gelingt es jedoch, qualitativ hochwertige Formkörper aus Polyurethanschaumstoffen mit kompakter Oberfläche aus den üblichen Ausgangsmaterialien unter Verwendung von organischen Carbonsäuren als wesentlichem Treibmittel herzustellen, obwohl auch bei der Verwendung von organischen Carbonsäuren die Treibwirkung im wesentlichen auf einer Freisetzung des bei der spontanen Reaktion zwischen Isocyanat- und Carboxylgruppen gebildeten Kohlendioxids beruht.

Gemäß DE-OS 3 041 589 werden zwar spezielle gemischte Carbonsäure-Carbamidsäure-Anhydride, wie sie aus Carbonsäuren und aliphatischen Isocyanaten entstehen, als Treibmittel zur Herstellung von Polyurethanschaumstoffen, insbesondere Integralschaumstoffen, beschrieben, jedoch ist dieses Verfahren für den großtechnischen Einsatz aus folgenden Gründen nicht geeignet:

Die gemischten Anhydride sollen einerseits bei Temperaturen von bis ca. 60°C, auch in Lösung, lagerstabil sein und andererseits bereits ab ca. 80°C unter Freisetzung von Kohlendioxid die Treibwirkung entfalten. Man bewegt sich daher hinsichtlich der Kohlendioxid-Abspalttemperatur auf einem sehr engen Grat. Zur Herstellung der gemischten Anhydride können nur aliphatische Isocyanate eingesetzt werden. Die üblicherweise als Polyisocyanatkomponente verwendeten aromatischen Polyisocyanate sind demgegenüber zur Herstellung der speziellen Treibmittel ungeeignet.

Zur Durchführung des Verfahrens müssen die gemischten Anhydride zunächst in einer separaten Reaktion hergestellt und isoliert und schließlich vorsichtig mit dem Polyolgemisch abgemischt werden. Dies sind zusätzliche Verfahrensschritte, die den Einsatz dieser Verbindungen weiter verteuern und kompliziert erscheinen lassen.

Gebrauchsfertige, die genannten Treibmittel enthaltende Polyole können kaum Gelagert und gefahrlos transportiert werden, da bei Überhitzungen, die trotz sorgfältiger Handhabung zuweilen auftreten können, die Gefahr eines gefährlichen Druckaufbaus nicht ausgeschlossen werden kann.

EP-A-154 669 und FR-A-2 509 317 beschreiben die Verwendung von Carbonsäuren als PU-Schaum-Treibmittel. Die Herstellung von PU-Schäumen mit kompakter Oberfläche und hoher Dichte kann diesen Druckschriften nicht entnommen werden.

EP-A-240 715 beschreibt die Herstellung von PU-Integralschaumstoffen unter Verwendung eines inneren Trennmittels, das Carbonsäuren enthält. Als physikalisch wirkende Treibmittel werden ausschließlich niedrig siedende Flüssigkeiten eingesetzt.

Alle diese Nachteile treten bei dem nachstehend näher beschriebenen erfindungsgemäßen Verfahren nicht auf, da die als Treibmittel eingesetzten Carbonsäuren der Reaktivkomponente für die Polyisocyanatkomponente gefahrlos zugesetzt werden können.

Gegenstand der Erfindung ist ein Verfahren zur Herstellung von Formkörpern einer Rohdichte von mindestens 250 kg/m³ aus Polyurethanschaumstoffen mit einer kompakten Oberfläche durch Formverschäumung eines Reaktionsgemischs aus
a) einer Polyisocyanatkomponente, bestehend aus mindestens einem aromatischen Polyisocyanat,
b) einer Reaktivkomponente, bestehend aus mindestens einer organischen Verbindung mit mindestens zwei gegenüber Isocyanatgruppen reaktionsfähigen Gruppen,
c) Treibmitteln
und gegebenenfalls
d) weiteren Hilfs- und Zusatzmitteln
unter Einhaltung einer Isocyanatkennzahl von 75 bis 1500, dadurch gekennzeichnet, daß man als Treibmittel c) organische Carbonsäuren, gegebenenfalls neben weiteren, chemischen oder physikalischen Treibmitteln, ausgenommen niedrigsiedende Flüssigkeiten, die gegenüber organischen Polyisocyanaten inert sind und Siedepunkte unter 100° C aufweisen, verwendet.

Als Polyisocyanat-Komponente a) kommen beliebige aromatische Polyisocyanate mit einem NCO-Gehalt von mindestens 20 Gew.-% in Betracht. Beispiele hierfür sind 2,4-Diisocyanatotoluol, dessen technischen Gemische mit 2,6-Diisocyanatotoluol oder, bevorzugt, die bekannten Polyisocyanate oder Polyisocyanatgemische der Diphenylmethanreihe wie sie beispielsweise durch Phosgenierung von Anilin/Formaldehyd-Kondensaten und gegebenenfalls destillative Aufarbeitung der Phosgenierungsprodukte zugänglich sind. Diese für das erfindungsgemäße Verfahren besonders gut geeigneten Polyisocyanate oder Polyisocyanatgemische weisen im allgemeinen einen Gehalt an Diisocyanatodiphenylmethan-Isomeren von 50 bis 100 Gew.-%. auf und bestehen im wesentlichen zum Rest aus höherfunktionellen Homologen dieser Diisocyanate. Die in diesen Gemischen vorliegenden Diisocyanate bestehen im wesentlichen aus 4,4′-Diisocyanatodiphenylmethan in Abmischung mit bis zu 60 Gew.-%, bezogen auf die Gesamtmenge der Diisocyanate, an 2,4′-Diisocyanatodiphenylmethan und gegebenenfalls geringen Mengen an 2,2′-Diisocyanatodiphenylmethan. Auch Urethan-, Carbodiimid- oder Allophanat-modifizierte Derivate dieser Polyisocyanate können als Polyisocyanatkomponente a) eingesetzt werden.

Bei der Reaktivkomponente b) handelt es sich um mindestens eine organische Verbindung mit mindestens zwei gegenüber Isocyanatgruppen reaktionsfahigen Gruppen. Im allgemeinen handelt es sich um Gemische von mehreren derartigen Verbindungen. Vorzugsweise handelt es sich bei den einzelnen Verbindungen der Komponente b) um die aus der Polyurethanchemie an sich bekannten organischen Polyhydroxylverbindungen.

In Betracht kommen insbesondere die an sich bekannten Polyhydroxypolyether des Molekulargewichtsbereichs 400 bis 10 000, vorzugsweise 1500 bis 6000, die pro Molekül mindestens 2, vorzugsweise 2 bis 6 Hydroxylgruppen der genannten Art aufweisen. Derartige Polyhydroxypolyether werden in an sich bekannter Weise durch Alkoxylierung von geeigneten Startermolekülen erhalten. Geeignete Startermoleküle sind beispielsweise Wasser, Propylenglykol, Glycerin, Trimethylolpropan, Sorbit, Rohrzucker, Aminoalkohole wie Ethanolamin oder Diethanolamin oder aliphatische Amine wie n-Hexylamin oder 1,6-Diaminohexan bzw. beliebige Gemische derartiger Startermoleküle. Geeignete Alkoxylierungsmittel sind insbesondere Propylenoxid und gegebenenfalls Ethylenoxid, welches im Gemisch mit Propylenoxid oder auch separat in getrennten Reaktionsschritten während der Alkoxylierungsreaktion zur Anwendung gelangen kann.

Auch die an sich bekannten Modifizierungsprodukte derartiger Polyetherpolyole, d.h. die bekannten Pfropfpolyether auf Basis der beispielhaft genannten einfachen Polyetherpolyole bzw. die bekannten Polyadditionsprodukte als Füllstoffe enthaltende Polyetherpolyole, beispielsweise Polyhydrazocarbonamide als disperse Füllstoffe enthaltende Polyetherpolyole sind geeignet.

Auch die üblichen Polyesterpolyole des Molekulargewichtsbereichs 400 bis 10.000, vorzugsweise 1500 bis 4000, die pro Molekül mindestens zwei, vorzugsweise 2 bis 6 Hydroxylgruppen aufweisen, sind als Komponente b) bzw. als Teil der Komponente b) geeignet. Geeignete Polyesterpolyole sind die an sich bekannten Umsetzungsprodukte von überschüssigen Mengen an mehrwertigen Alkoholen der als Startermoleküle bereits beispielhaft genannten Art mit mehrbasischen Säuren wie beispielsweise Bernsteinsäure, Adipinsäure, Phthalsäure, Tetrahydrophthalsäure oder beliebigen Gemischen derartiger Säuren.

Auch niedermolekulare Polyhydroxylverbindungen, d.h. solche eines Molekulargewichtsbereichs von 62 bis 399 sind als Komponente b) bzw. als Teil der Komponente b) geeignet. Hierzu gehören die aus der Polyurethanchemie an sich bekannten niedermolekularen, Hydroxylgruppen aufweisenden Kettenverlängerungsmittel bzw. Vernetzer wie Alkanpolyole der bereits oben als Startermoleküle beispielhaft genannten Art oder auch niedermolekulare Polyetherpolyole, wie sie durch Alkoxylierung dieser Startermoleküle zugänglich sind.

Die Komponente b) besteht, wie bereits ausgeführt, vorzugsweise aus organischen Polyhydroxylverbindungen bzw. aus Gemischen organischer Polyhydroxylverbindungen der beispielhaft genannten Art, wobei als Komponente b) sowohl Gemische der beispielhaft genannten höhermolekularen Polyhydroxylverbindungen mit den beispielhaft genannten niedermolekularen Polyhydroxylverbindungen als auch niedermolekulare Polyhydroxylverbindungen der beispielhaft genannten Art allein in Betracht kommen.

Die Reaktivkomponente b) kann, zumindest zum Teil, auch aus Aminogruppen aufweisenden Verbindungen bestehen. Hierzu gehören sowohl Aminopolyether des Molekulargewichtsbereichs 400 bis 12.000, vorzugsweise 2000 bis 8000 mit mindestens zwei aliphatisch und/oder aromatisch gebundenen primären und/oder sekundären, vorzugsweise primären Aminogruppen als auch niedermolekulare Polyamine des Molekulargewichtsbereichs 60 bis 399.

Zu den Aminopolyethern gehören solche der in EP-B-00 81 701, US-PS 3 654 370, US-PS 3 155 728, US-PS 3 236 895, US-PS 3 808 250, US-PS 3 975 428, US-PS 4 016 143, US-PS 3 865 791 oder DE-OS 2 948 491 genannten Art. Zu den niedermolekularen Polyaminen gehören beispielsweise aliphatische Polyamine wie Ethylendiamin, 1,6-Diaminohexan oder vorzugsweise aromatische Polyamine, insbesondere alkylsubstituierte Phenylendiamine wie 1-Methyl-3,5-diethyl-2,4-diaminobenzol, 1-Methyl-3,5-diethyl-2,6-diaminobenzol, 4,6-Dimethyl-2-ethyl-1,3-diaminobenzol, 3,5,3',5'-Tetraethyl-4,4'-diaminodiphenylmethan, 3,5,3',5'-Tetraisopropyl-4,4'-diaminodiphenylmethan, 3,5-Diethyl-3',5'-diisopropyl-4,4'-diaminodiphenylmethan oder beliebige Gemische derartiger Verbindungen.

Als Treibmittel c) werden erfindungsgemäß organische Carbonsäuren - gegebenenfalls zusammen mit anderen an sich bekannten chemischen oder physikalischen Treibmitteln, ausgenommen niedrigsiedende Flüssigkeiten, die gegenüber organischen Polyisocyanaten inert sind und Siedepunkte unter 100° C aufweisen, eingesetzt.

Geeignete Carbonsäuren sind insbesondere aliphatische Carbonsäuren des Molekulargewichtsbereichs 46 bis 500, vorzugsweise 60 bis 300. Besonders bevorzugt sind solche aliphatische Carbonsäuren, die neben einer Carboxylgruppe mindestens eine weitere gegenüber Isocyanatgruppen reaktionsfähige Gruppe, ausgewählt aus der Gruppe bestehend aus primären alkoholischen Hydroxylgruppen, sekundären alkoholischen Hydroxylgruppen, Mercaptogruppen, primären Aminogruppen, sekundären Aminogruppen oder Carboxylgruppen, enthalten.

In Betracht kommen somit einfache Monocarbonsäuren wie Essigsäure, Propionsäure, Pivalinsäure, Cyclohexancarbonsäure, Dodecansäure, Stearinsäure, Ölsäure bzw. Gemische derartiger Säuren, vorzugsweise jedoch aliphatische Carbonsäuren, die zusätzlich zur Carboxylgruppe weitere Reaktivgruppen der genannten Art enthalten, wie beispielsweise Milchsäure, Glykolsäure, Weinsäure, 2-Mercaptoessigsäure, 3-Mercaptopropionsäure, 6-Aminohexansäure, 6-Methylaminohexansäure, Bernsteinsäure, Adipinsäure oder Hexahydrophthalsäure (cycloaliphatische Verbindungen werden im Rahmen der Erfindung als aliphatische Verbindungen angesehen). Besonders bevorzugt wird Milchsäure als organische Carbonsäure verwendet.

Die Verwendung von aromatischen Carbonsäuren wie beispielsweise von Benzoesäure, 4-Methylbenzoesäure oder Phthalsäure ist zwar prinzipiell möglich, wegen der geringen Löslichkeit dieser Säuren in der Reaktivkomponente b) jedoch weniger bevorzugt.

Bei der Durchführung des erfindungsgemäßen Verfahrens können die beispielhaft genannten erfindungswesentlichen organischen Carbonsäuren auch in Kombination mit untergeordneten Mengen an anderen, an sich bekannten chemischen oder physikalischen Treibmitteln, ausgenommen niedrigsiedende Flüssigkeiten, die gegenüber organischen Polyisocyanaten inert sind und Siedepunkte unter 100° C aufweisen, verwendet werden. Hierzu gehören Wasser, in den Ausgangskomponenten physikalisch gelöste Gase wie Luft, Kohlendioxid oder Stickstoff, Pyrokohlensäureester oder stickstoffabspaltende Verbindungen. Die Mitverwendung von derartigen weiteren Treibmitteln ist jedoch, von der oftmals nicht zu vermeidenden Mitverwendung von Wasser und eingerührter Luft abgesehen, nicht bevorzugt. Diese anderen Treibmittel machen im allgemeinen, falls sie überhaupt anwesend sind, maximal 50, vorzugsweise maximal 25 Gew.-%. aller im Reaktionsgemisch vorliegenden Treibmittel aus.

Die Mitverwendung von Wasser als weiteres Treibmittel kann oftmals nicht umgangen werden, da die Ausgangskomponenten, insbesondere die Komponente b), oftmals Spuren von Wasser enthalten und auch manche der eingesetzten Carbonsäuren als Gemische mit Wasser im Handel sind und als solche eingesetzt werden. Im allgemeinen liegt die Gesamtmenge des im Reaktionsgemisch vorliegenden Wassers bei maximal 3 Mol, im allgemeinen bei maximal 1,5 Mol Wasser pro Mol an in den Carbonsäuren vorliegenden Carboxylgruppen.

Besonders bevorzugt wird wasserhaltige Milchsäure, d.h. eine Lösung verwendet, die zu 80 bis 99 Gew.-% aus Milchsäure und zu 20 bis 1 Gew.-% aus Wasser besteht.

Die Gesamtmenge der eingesetzten Treibmittel richtet sich selbstverständlich nach der jeweils angestrebten Dichte der Formkörper. Im allgemeinen macht das Gewicht der Komponente c) 0,1 bis 10, vorzugsweise 0,4 bis 4 Gew.-% des gesamten aus den Komponenten a), b), c) und d) bestehenden Reaktionsgemischs aus. Die gegenüber Isocyanatgruppen reaktionsfähigen Gruppen der Komponente c) gehen mit in die Berechnung der Isocyanatkennzahl ein.

Bei den gegebenenfalls mitzuverwendenden weiteren Hilfs- und Zusatzmitteln handelt es sich beispielsweise um die an sich bekannten, die Isocyanat-Polyadditionsreaktion beschleunigenden Katalysatoren wie tert. Amine wie Triethylendiamin, N,N-Dimethylbenzylamin oder N,N-Dimethylcyclohexylamin bzw. metallorganische Verbindungen, insbesondere Zinnverbindungen wie Zinn(II)-octoat oder Dibutylzinndilaurat. Auch Trimerisierungskatalysatoren wie beispielsweise Alkaliacetate wie Natrium- oder Kaliumacetat, Alkaliphenolate, wie Natriumphenolat oder Natriumtrichlorphenolat oder 2,4,6-Tris-(dimethylaminomethyl)-phenol oder auch Bleinaphthenat, Bleibenzoat oder Bleioctoat können erfindungsgemäß zum Einsatz gelangen, falls an die Herstellung von Isocyanuratgruppen aufweisenden Polyurethanschaumstoffen gedacht ist.

Weitere, gegebenenfalls mitzuverwendende Hilfs- und Zusatzstoffe d) sind beispielsweise die an sich bekannten Schaumstabilisatoren, beispielsweise jene auf Basis von Polyether-modifizierten Polysiloxanen.

Weitere, gegebenenfalls mitzuverwendende Hilfs- und Zusatzmittel d) sind innere Formtrennmittel, beispielsweise solche der in EP-B-00 81 701, US-PS 3 726 952, GB-PS 1 365 215, US-PS 4 098 731, US-PS 4 058 492, DE-OS 2 319 648, US-PS 4 033 912, US-PS 4 024 090, DE-OS 2 427 273 oder US-PS 4 098 731 beschriebenen Art.

Zur Durchführung des erfindungsgemäßen Verfahrens wird im allgemeinen so vorgegangen, daß die Ausgangskomponenten b) bis d) vorab miteinander vermischt und anschließend mit der Polyisocyanatkomponente a) vereinigt werden. Die letztgenannte Durchmischung erfolgt beispielsweise unter Verwendung von Rührwerksmischern oder vorzugsweise unter Verwendung der üblichen Hochdruck-Mischaggregate, wie sie üblicherweise zur Herstellung von Polyurethanschaumstoffen verwendet werden. Unmittelbar nach der Herstellung des Reaktionsgemisches erfolgt die Befüllung der Form, wobei die Menge des in die Form eingetragenen Reaktionsgemisches der angestrebten Rohdichte der Formkörper angepaßt wird. Neben diesem Einstufen-Verfahren kann das erfindungsgemäße Verfahren auch nach dem Semiprepolymerprinzip durchgeführt werden. Hierbei wird die Gesamtmenge der Polyisocyanatkomponente a) mit einem Teil der Komponente b), beispielsweise unter Einhaltung eines NCO/OH-Äquivalentverhältnisses von mindestens 3:1, vorzugsweise mindestens 8:1 zu einem NCO-Semiprepolymeren umgesetzt, welches anschließend mit einem Gemisch der verbleibenden Komponenten b) bis d) zur Reaktion gebracht wird. Dabei können selbstverständlich zur Herstellung der NCO-Semiprepolymeren Polyhydroxylverbindungen b) eingesetzt werden, die von den Polyhydroxylverbindungen b), die anschließend mit den NCO-Semiprepolymeren abgemischt werden, verschieden sind.

Bei allen Varianten des erfindungsgemäßen Verfahrens werden die Mengenverhältnisse der Einzelkomponenten so gewählt, daß eine Isocyanatkennzahl von 75 bis 1500, vorzugsweise 80 bis 150 vorliegt. Unter "Isocyanatkennzahl" ist hierbei der Quotient der Anzahl der Isocyanatgruppen geteilt durch die Anzahl der gegenüber Isocyanatgruppen reaktionsfähigen Gruppen multipliziert mit 100 zu verstehen. Wesentlich über 100 liegende Isocyanatkennzahlen kommen dann in Betracht, wenn unter gleichzeitiger Mitverwendung von Trimerisierungskatalysatoren die Herstellung von Isocyanurat-modifizierten Polyurethanschaumstoffen angestrebt wird.

Die Rohdichte der Formkörper liegt bei mindestens 250, vorzugsweise bei 400 bis 800 kg/m³.

Im allgemeinen beträgt die Temperatur der zur Anwendung gelangenden Formwerkzeuge mindestens 30°C, vorzugsweise mindestens 50°C. Die Innenwände der Werkzeuge können erforderlichenfalls vor der Befüllung mit an sich bekannten äußeren Formtrennmitteln beschichtet werden.

Das erfindungsgemäße Verfahren gestattet auch ohne Mitverwendung der bislang stets eingesetzten Fluorchlorkohlenwasserstoffe die Herstellung von hochwertigen Polyurethanschaumstoff-Formteilen einer kompakten, blasenfreien Oberfläche. Das erfindungsgemäße Verfahren eignet sich insbesondere zur Herstellung von halbharten bis harten Integralschaumstoffen mit einer kompakten Oberfläche, wie sie in der Automobil- und Möbelindustrie in großem Umfang zum Einsatz gelangen.

### Beispiele

### Ausgangsmaterialien:

### Komponente a):

Polyisocyanatgemisch der Diphenylmethanreihe mit einem NCO-Gehalt von 31 Gew.-% und einem Gehalt an isomeren Diisocyanatodiphenylmethanen von 60 Gew.-%, davon 55 Gew.-% 4,4′- und ca. 5 Gew.-% 2,4′-Diisocyanatodiphenylmethan.

### Polyolkomponente b1):

Propoxylierungsprodukt von Trimethylolpropan der OH-Zahl 860.

### Polyolkomponente b2):

Propoxylierungsprodukt von Trimethylolpropan der OH-Zahl 42.

### Zusatzmittel d1 (Stabilisator):

Handelsübliches Polyethersiloxan (®Tegostab OS 50, Hersteller: Goldschmidt AG, 4300 Essen 1).

### Zusatzmittel d2 (Katalysator):

N,N-Dimethylcyclohexylamin

Die in Tabelle 1 angegebenen Polyolmischungen werden mit der ebenfalls in Tabelle 1 angegebenen Menge der Polyisocyanatkomponente a) verarbeitet.

**Tabelle 1**

| (alle Zahlen beziehen sich aus Gewichtsteile) | | | | |
|---|---|---|---|---|
| Komponente | Beispiel | | | |
| | 1 | 2 | 3 | 4 |
| b1 | 57 | 57 | 57 | 57 |
| b2 | 39 | 39 | 39 | 39 |
| d1 | 2 | 2 | 2 | 2 |
| d2 | 3 | 4 | 2 | 2 |
| Wasser | - | 0,3 | 0,84 | - |
| 2-Hydroxypropansäure | - | 2,7 | - | - |
| Propansäure | 3,5 | - | - | - |
| Monofluortrichlormethan | - | - | - | 6 |
| a | 142 | 148 | 148 | 134 |
| NCO-Kennzahl | 110 | 110 | 110 | 110 |

### Allgemeine Anmerkungen zu den Ausführungsbeispielen:

Unter Verwendung der in Tabelle 1 mitgeteilten Rezepturen wurden plattenförmige Schaumstoff-Formkörper der Rohdichte 400 bis 600 kg/m³ hergestellt (vgl. Tabelle 2). Als Formwerkzeug diente eine Plattenform der Abmessung 10 x 200 x 200 mm, deren Innenwände mit einem handelsüblichen äußeren Formtrennmittel auf Wachsbasis (®Acmosil 180, Hersteller: Acmos, D-2800 Bremen 1) beschichtet worden waren. Vor der Verarbeitung wurden die Polyolmischungen durch kurzzeitiges hochtouriges Rühren (5 Minuten, 1000 UpM, Propellerrührer) mit 10 Vol-%, bezogen auf Atmosphärendruck, feindisperser Luft beladen.

Die Herstellung der Reaktionsgemische aus den Polyolmischungen und der Polyisocyanatkomponente a) erfolgte unter Verwendung einer üblichen Rührwerksmischvorrichtung. Die Dichte der jeweiligen Formkörper wurde durch die Menge des jeweils in die Form eingetragenen Reaktionsgemisches bestimmt.

### Beispiele:

- 1 und 2: Erfindungsgemäße Beispiele unter Verwendung von Carbonsäure bzw. Carbonsäure/Wassergemisch als CO₂ bildende Treibmittel.
- 3: Vergleichsbeispiel mit Wasser als CO₂ bildende Treibmittel.
- 4: Vergleichsbeispiel unter Verwendung von Monofluortrichlormethan als Treibmittel (klassischer Integralschaumstoff hoher Härte).

In der nachstehenden Tabelle 2 wird die Oberflächenhärte Shore D für die einzelnen Schaumstoff-Formkörper mitgeteilt:

**Tabelle 2**

| Rohdichte (kg/m³) | Beispiele | | | |
|---|---|---|---|---|
| | 1 | 2 | 3 | 4 |
| 400 | 60 | 55 | 50 | 60 |
| 500 | 68 | 66 | 57 | 69 |
| 600 | 74 | 72 | 66 | 75 |

Die Oberflächenhärte der erfindungsgemäßen Beispielserie 1 und 2 liegt bei allen Rohdichten deutlich über dem Carbonsäure-freien Vergleichsbeispiel 3. Sie liegen nur geringfügig unter der Oberflächenhärte des Wasser-frei mit R 11 als Treibmittel hergestellten Integralschaums (Vergleichsbeispiel 4).

## Patentansprüche

1. Verfahren zur Herstellung von Formkörpern einer Rohdichte von mindestens 250 kg/m³ aus Polyurethanschaumstoffen mit einer kompakten Oberfläche durch Formverschäumung eines Reaktionsgemischs aus
a) einer Polyisocyanatkomponente, bestehend aus mindestens einem aromatischen Polyisocyanat,
b) einer Reaktivkomponente, bestehend aus mindestens einer organischen Verbindung mit mindestens zwei gegenüber Isocyanatgruppen reaktionsfähigen Gruppen,
c) Treibmitteln
und gegebenenfalls
d) weiteren Hilfs- und Zusatzmitteln
unter Einhaltung einer Isocyanatkennzahl von 75 bis 1500, dadurch gekennzeichnet, daß man als Treibmittel c) organische Carbonsäuren, gegebenenfalls neben weiteren chemischen oder physikalischen Treibmitteln, ausgenommen niedrigsiedende Flüssigkeiten, die gegenüber organischen Polyisocyanaten inert sind und Siedepunkte unter 100° C aufweisen, verwendet.

2. Verfahren gemäß Anspruch 1, dadurch gekennzeichnet, daß man als Carbonsäuren c) aliphatische Carbonsäuren des Molekulargewichtsbereichs 60 bis 300 verwendet,

3. Verfahren gemäß Anspruch 1 bis 2, dadurch gekennzeichnet, daß man als Carbonsäuren c) solche verwendet, die neben einer Carboxylgruppe mindestens eine weitere gegenüber Isocyanatgruppen reaktionsfähige Gruppe, ausgewählt aus der Gruppe bestehend aus primären alkoholischen Hydroxylgruppen, sekundären alkoholischen Hydroxylgruppen, Mercaptogruppen, primären Aminogruppen, sekundären Aminogruppen oder Carboxylgruppen, enthalten.

4. Verfahren gemäß Anspruch 1 bis 3, dadurch gekennzeichnet, daß man als Carbonsäure c) Milchsäure verwendet.

5. Verfahren gemäß Anspruch 1 bis 4, dadurch gekennzeichnet, daß man als Treibmittel c) eine wäßrige Lösung verwendet, die aus 80 bis 99 Gew,-% Milchsäure und 20 bis 1 Gew`-% Wasser besteht.

## Claims

1. A process for the production of mouldings having a density of at least 250 kg/m³ of polyurethane foams having a compact surface by in-mould foaming of a reaction mixture of
a) a polyisocyanate component consisting of at least one aromatic polyisocyanate,
b) a reactive component consisting of at least one organic compound containing at least two isocyanate-reactive groups,
c) blowing agents
and, optionally,
d) other auxiliaries and additives,
maintaining an isocyanate index of 75 to 1500,
characterized in that organic carboxylic acids are used as the blowing agent c), optionally in addition to other chemical or physical blowing agents except low-boiling liquids which are inert to organic polyisocyanates and which have boiling points below 100°C.

2. A process as claimed in claim 1, characterized in that aliphatic carboxylic acids having a molecular weight in the range from 60 to 300 are used as the carboxylic acids c).

3. A process as claimed in claims 1 and 2, characterized in that the carboxylic acids c) used are those which, in addition to a carboxylic group, contain at least one other isocyanate-reactive group selected from the group consisting of primary alcolohic hydroxyl groups, secondary alcoholic hydroxyl groups, mercapto groups, primary amino groups, secondary amino groups or carboxyl groups.

4. A process as claimed in claims 1 to 3, characterized in that lactic acid is used as the carboxylic acid c).

5. A process as claimed in claims l to 4, characterized in that an agueous solution consisting of 80 to 99% by weight lactic acid and 20 to 1% by weight water is used as the blowing agent c).

## Revendications

1. Procédé de préparation d'objets moulés à une densité apparente d'au moins 250 kg/m³ en mousses de polyuréthannes à surface compacte par gonflement en moule d'un mélange de réaction consistant en :
a) un composant polyisocyanate consistant lui-même en au moins un polyisocyanate aromatique,
b) un composant réactif consistant en au moins un composé organique à au moins deux groupes réactifs avec les groupes isocyanate,
c) des agents porogènes,
et le cas échéant
d) d'autres produits auxiliaires et additifs,
avec maintien d'un indice d'isocyanate de 75 à 1500, caractérisé en ce que l'on utilise en tant qu'agents porogènes c) des acides organiques carboxyliques, éventuellement avec d'autres agents porogènes chimiques ou physiques, à l'exception de liquides à bas point d'ébullition inertes à l'égard des polyisocyanates organiques et ayant des points d'ébullition inférieurs à 100°C.

2. Procédé selon la revendication 1, caractérisé en ce que l'on utilise en tant qu'acides carboxyliques c) des acides carboxyliques aliphatiques de poids moléculaire 60 à 300.

3. Procédé selon les revendications 1 et 2, caractérisé en ce que l'on utilise en tant qu'acides carboxyliques c) des acides qui contiennent, outre un groupe carboxyle, au moins un autre groupe réactif avec les groupes isocyanate choisi parmi les groupes hydroxy alcooliques primaires, les groupes hydroxy alcooliques secondaires, les groupes mercapto, les groupes amino primaires, les groupes amino secondaires et les groupes carboxyle.

4. Procédé selon les revendications 1 à 3, caractérisé en ce eue l'on utilise en tant qu'acide carboxylique c) l'acide lactique.

5. Procédé selon les revendications 1 à 4, caractérisé en ce que l'on utilise en tant qu'agent porogène c) une solution aqueuse consistant en 80 à 99 % en poids d'acide lactique et 20 à 1 % en poids d'eau.
